# EUROPEAN PATENT SPECIFICATION

(11) **EP 2 958 470 B1**
(45) Date of publication and mention of the grant of the patent: **04.04.2018**
(21) Application number: 14754693.1
(22) Date of filing: 06.02.2014
(51) Int. Cl.: A47J 37/07, F23Q 7/04

(54) **DEVICE FOR ACCELERATING THE IGNITION OF CHARCOALS IN A CHARCOAL STARTER**
VORRICHTUNG ZUR BESCHLEUNIGUNG DER ZÜNDUNG VON HOLZKOHLEN IN EINEM HOLZKOHLESTARTER
DISPOSITIF POUR ACCÉLÉRER L'ALLUMAGE DE CHARBONS DE BOIS DANS UN ALLUME-CHARBON

(30) Priority: 25.02.2013 DK 201370102
(43) Date of publication of application: 30.12.2015
(73) Proprietor: Padamo Denmark ApS, 5792 Aarslev (DK)
(72) Inventor: KRISTENSEN, Morten, DK-5792 Aarslev (DK); PEDERSEN, Daniel, DK-5000 Odense C (DK); THOMSEN, Patrick, DK-5000 Odense C (DK)
(74) Representative: Orsnes, Henrik Egede
(86) International application number: PCT/DK2014/050031
(87) International publication number: WO 2014/127781

(56) References cited:
- EP-A2- 2 301 398
- CN-Y- 201 012 050
- DK-U3- 200 500 080
- NL-C- 2 006 439
- US-A1- 2007 044 784
- US-A1- 2008 000 467
- US-A1- 2013 032 134

## Description

### FIELD OF THE INVENTION

The present invention relates to a device for accelerating the ignition of charcoals in a charcoal starter, preferably a cylindrical charcoal starter.

### BACKGROUND OF THE INVENTION

Charcoal fuelled grills, which have not materially changed for several decades, are generally considered to be very slow to ignite and make ready for barbequing. The prior art has attempted to make charcoal ignition more convenient. Charcoal starters are known which ignite charcoal briquettes prior to their insertion into the grill. These devices typically are open cylinders which heat the charcoal from below. Once the charcoal is heated, it can be deposited into the grill by pouring the briquettes from the open top end of the cylinder. An advantage to this type of charcoal starting device is that it allows one batch of charcoal to be started while the grill is being used by a previous batch of charcoal. However, since this device also takes considerable time to ignite charcoal, a second batch of charcoal must be started well in advance of the time it is to be placed in the grill. As a result, charcoal may be wasted by starting batches that may not be needed by the time the charcoal is ready to use.

There appears to have been no serious efforts to solve the long-standing real problems that could have helped to ensure the viability of charcoal as a fuel. Meaningful efforts have been virtually restricted to reducing the time required to fully ignite a bed of charcoal with a small fan, however, such fan solutions have so far not been very useful due to the heterogeneous ignition of charcoals placed in the upper and lower parts of the charcoal starter. Moreover, in charcoal starters using ignition briquettes (e.g. gel-based or similar) to accelerate the ignition of the charcoal the igniting flames are not sufficiently well-distributed within the charcoal starter. As an example thereof EP 2301398 A2 discloses a device for accelerating the ignition of charcoals in a charcoal starter, where the device comprises a house with a flat roof having a centrally positioned arc-shaped perforated portion, through which airflow can escape and a cup for liquid fuel disposed under the arc-shaped perforated portion. This device provides a too slow and heterogeneous ignition of charcoals placed in a charcoal starter. Another device is described in US2008/0000467 A1. Hence, the present invention aims to overcome these problems by providing a solution for obtaining homogeneously ignited charcoals in common cylindrical charcoal starters, such as those sold by the company Weber (e.g. US patent no 5469835).

### SUMMARY OF THE INVENTION

Accordingly the present invention is directed to a device for igniting charcoals in a charcoal starter by using forced air. The device is used to prepare, or start, charcoal and/or other wood-based fuels for use in a barbeque or similar structure for cooking food.

The device includes a housing enclosing air delivery means for delivering an air flow. The device is configured to receive cylindrical charcoal starters.

The present invention provides a device for accelerating the ignition of charcoals in a charcoal starter, preferably a cylindrical charcoal starter, said device comprising:
- a housing with a roof, preferably a flat roof, enclosing air delivery means for delivering an upwardly directed airflow through the roof, said flat roof having a centrally positioned cone-shaped perforated portion through which the airflow can escape the housing, said roof being able to receive the lower part of the charcoal starter; and
- a tray, preferably a fixed or detachable disc-shaped tray, for placing solid burning fuel, said tray having a hole fitting the cone-shaped perforated portion.

In a preferred embodiment of the invention the housing is a vertically disposed cylindrical wall with perforations for inlet air.

Preferably the cone-shaped portion protrudes 2-10 cm above the flat part of the roof. Also preferred is that the cone-shaped portion has a diameter in its lower part of 3-10 cm. Moreover, it is preferred that the cone-shaped portion has a diameter in its upper part of 1-6 cm. Similarly it is preferred that the cone-shaped portion forms an angle with the flat part of the roof of 25-85 degrees, preferably 60-85 degrees.

The air delivery means may include a fan, blower, or compressor, and in some embodiments, the air delivery mechanism is a battery-powered air delivery mechanism.

### BRIEF DESCRIPTION OF THE DRAWINGS

- FIG. 1: is a side elevation view of the device according to the present invention.
- FIG. 2: is a partial cross-sectional, partial fragmentary view of the device of FIG. 1.

### DETAILED DESCRIPTION OF THE INVENTION

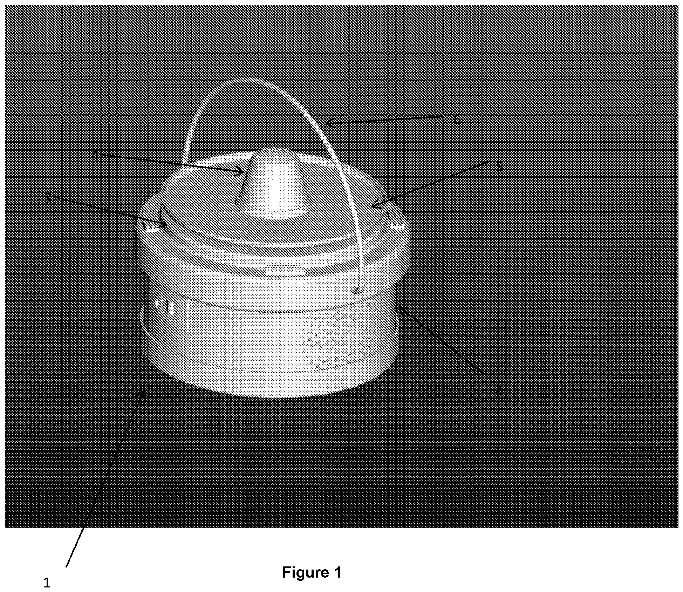

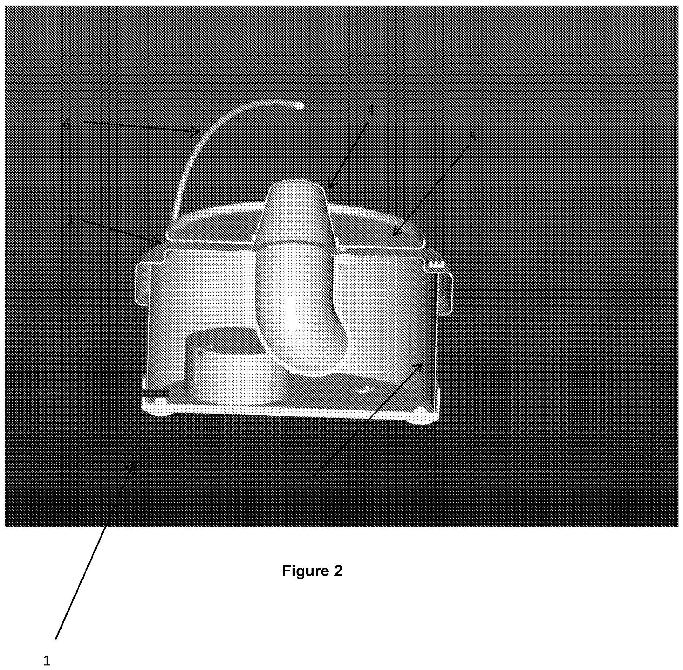

An illustrative, non-exclusive example of the device according to the present disclosure is shown in FIGS. 1 and 2. The device **1** is designed to prepare charcoal, wood, or other combustible fuels for use in barbequing food.

The device **1** is designed to "start" charcoal, wood, or a similar barbequing fuel prior to the fuel's use to cook food, typically after removal of the fuel from the igniter and placement of the fuel in a barbeque or similar structure for cooking food.

As appears from FIGS. 1 and 2, the device **1** has a housing **2** with a roof **3** enclosing air delivery means for delivering an upwardly directed airflow through a centrally positioned cone-shaped perforated portion **4** through which the airflow can escape the housing **2.** A tray **5** with a central hole is placed on the cone-shaped portion **4.** Importantly, the present inventors have found that the tray in combination with the cone-shaped portion result in a very efficient and even ignition of the charcoals; within a few minutes the charcoals are ready for cooking.

The flow of air is a forced-air flow, as the air delivery means forces the flow of air through the cone-shaped perforated portion and thereby focuses the air flow into the central part of the charcoal starter. The inventors have surprisingly found that this air-flow efficiently provides air (oxygen) to the flame generated by the solid burning fuel (such as petroleum based fuel) placed in the tray **5.**

The handle **6** is useful when the user desires to move the device from place to place.

## Claims

1. A device **1** for accelerating the ignition of charcoals in a charcoal starter, preferably a cylindrical charcoal starter, said device comprising:
• a housing **2** with a roof **3,** preferably a flat roof, enclosing air delivery means for delivering an upwardly directed airflow through the roof, said flat roof having a centrally positioned cone-shaped perforated portion **4** through which the airflow can escape the housing, said roof being able to receive the lower part of the charcoal starter; **characterized in that** the device comprises
• a tray **5,** preferably a fixed or detachable disc-shaped tray, for placing solid burning fuel, said tray having a hole fitting the cone-shaped perforated portion.

2. The device **1** according to claim 1, wherein the housing **2** is a vertically disposed cylindrical wall with perforations for inlet air.

3. The device **1** according to claim 1 or 2, wherein the cone-shaped portion **4** protrudes 2-10 cm above the flat part of the roof **3.**

4. The device **1** according to any one of the claims 1-3, wherein the cone-shaped portion **4** has a diameter in its lower part of 3-10 cm.

5. The device **1** according to any one of the claims 1-4, wherein the cone-shaped portion **4** has a diameter in its upper part of 1-6 cm.

6. The device **1** according to any one of the claims 1-5, wherein the cone-shaped portion **4** forms an angle with the flat part of the roof **3** of 25-85 degrees, preferably 60-85 degrees.

7. The device **1** according to any one of the claims 1-6, wherein the air delivery means includes a fan, blower, or compressor, and in some embodiments, the air delivery mechanism is a battery-powered air delivery mechanism.

8. The device **1** according to any one of the claims 1-7, wherein the device **1** is provided with a handle **6** for easy carrying of the device.

9. The device **1** according to any one of the claims 1-8, wherein the tray is 1-9 cm, preferably 2-5 cm, above the flat part of the roof **3.**

## Patentansprüche

1. Vorrichtung **1** zum Beschleunigen der Zündung von Holzkohle in einem Holzkohle-Starter, vorzugsweise einem zylindrischen Holzkohle-Starter, wobei die Vorrichtung umfasst:
• ein Gehäuse **2** mit einem Dach **3,** vorzugsweise einem Flachdach, das Luftzufuhrmittel zum Zuführen eines nach oben gerichteten Luftstroms durch das Dach einschließt, wobei das flache Dach einen zentral positionierten, kegelförmigen perforierten Abschnitt **4** aufweist, durch den der Luftstrom aus dem Gehäuse entweichen kann und wobei das Dach den unteren Teil des Holzkohle-Starters aufnehmen kann; **dadurch gekennzeichnet**, das die Vorrichtung umfasst:
• ein Tablett **5,** vorzugsweise ein fixiertes oder abnehmbares, scheibenförmiges Tablett, zum Einbringen von festem Brennstoff, wobei das Tablett ein Loch aufweist, das in den kegelförmigen perforierten Teil passt.

2. Vorrichtung **1** nach Anspruch 1, wobei das Gehäuse 2 eine vertikal angeordnete zylindrische Wand mit Perforationen für Einlassluft ist.

3. Vorrichtung **1** nach Anspruch 1 oder 2, wobei der kegelförmige Abschnitt 4 2-10 cm über den flachen Teil des Daches **3** vorsteht.

4. Vorrichtung **1** nach einem der Ansprüche 1-3, wobei der kegelförmige Abschnitt **4** in seinem unteren Teil einen Durchmesser von 3-10 cm aufweist.

5. Vorrichtung **1** nach einem der Ansprüche 1-4, wobei der kegelförmige Abschnitt **4** in seinem oberen Teil einen Durchmesser von 1-6 cm aufweist.

6. Vorrichtung **1** nach einem der Ansprüche 1 bis 5, wobei der kegelförmige Abschnitt einen Winkel von 25-85 Grad, vorzugsweise 60-85 Grad, mit dem flachen Teil des Dachs bildet.

7. Vorrichtung **1** nach einem der Ansprüche 1 bis 6, wobei die Luftzuführeinrichtung einen Lüfter, ein Gebläse oder einen Kompressor umfasst und in einigen Ausführungsformen der Luftzuführmechanismus ein batteriebetriebener Luftzuführmechanismus ist.

8. Vorrichtung **1** nach einem der Ansprüche 1-7, wobei die Vorrichtung **1** mit einem Griff **6** zum leichten Tragen der Vorrichtung versehen ist.

9. Vorrichtung **1** nach einem der Ansprüche 1 bis 8, wobei das Tablett 1-9 cm, vorzugsweise 2-5 cm, über dem flachen Teil des Dachs **3** ist.

## Revendications

1. Dispositif **1** d'accélération de l'allumage des charbons dans un démarreur de charbon de bois, de préférence un démarreur de charbon de bois cylindrique, ledit dispositif comprenant:
• un boîtier **2** avec un toit **3,** de préférence un toit plat, renfermant des moyens de distribution d'air pour délivrer un flux d'air dirigé vers le haut à travers le toit, ledit toit plat ayant une partie perforée **4** centrée en forme de cône par laquelle le flux d'air peut s'échapper du boîtier, ledit toit pouvant recevoir la partie inférieure du démarreur de charbon de bois; **caractérisé en ce que** le dispositif comprend
• un plateau **5,** de préférence un plateau en forme de disque fixe ou détachable, pour placer du combustible solide, ledit plateau ayant un trou ajustant la partie perforée en forme de cône.

2. Dispositif **1** selon la revendication 1, dans lequel le boîtier **2** est une paroi cylindrique disposée verticalement avec des perforations pour l'entrée d'air.

3. Dispositif **1** selon la revendication 1 ou 2, dans lequel la partie en forme de cône **4** fait saillie de 2-10 cm au-dessus de la partie plane du toit **3.**

4. Dispositif **1** selon l'une quelconque des revendications 1 à 3, dans lequel la partie en forme de cône **4** a un diamètre dans sa partie inférieure de 3-10 cm.

5. Dispositif **1** selon l'une quelconque des revendications 1 à 4, dans lequel la partie en forme de cône **4** a un diamètre dans sa partie supérieure de 1-6 cm.

6. Dispositif **1** selon l'une quelconque des revendications 1 à 5, dans lequel la partie en forme de cône **4** forme un angle avec la partie plate du toit **3** de 25-85 degrés, de préférence de 60-85 degrés.

7. Dispositif **1** selon l'une quelconque des revendications 1 à 6, dans lequel les moyens de distribution d'air comprennent un ventilateur, une soufflante ou un compresseur, et dans certains modes de réalisation, le mécanisme de distribution d'air est un mécanisme de distribution d'air alimenté par batterie.

8. Dispositif **1** selon l'une quelconque des revendications 1 à 7, dans lequel le dispositif 1 est muni d'une poignée **6** pour faciliter le transport du dispositif.

9. Dispositif **1** selon l'une quelconque des revendications 1 à 8, dans lequel le plateau est de 1-9 cm, de préférence de 2-5 cm, au-dessus de la partie plate du toit **3.**
